# EUROPÄISCHE PATENTSCHRIFT

(11) **EP 4 396 459 B1**
(45) Veröffentlichungstag und Bekanntmachung des Hinweises auf die Patenterteilung: **13.05.2026**
(21) Anmeldenummer: 22747703.1
(22) Anmeldetag: 19.07.2022
(51) Int. Cl.: F03G 7/06, F25B 23/00

(54) **ELASTOKALORISCHES ELEMENT FÜR EIN TEMPERIERSYSTEM**
ELASTOCALORIC ELEMENT FOR A TEMPERATURE CONTROL SYSTEM
ÉLÉMENT ÉLASTOCALORIQUE POUR SYSTÈME DE RÉGULATION DE TEMPÉRATURE

(30) Priorität: 02.09.2021 DE 102021209664
(43) Veröffentlichungstag der Anmeldung: 10.07.2024
(73) Patentinhaber: VOLKSWAGEN AKTIENGESELLSCHAFT, 38440 Wolfsburg (DE)
(72) Erfinder: SCHNECK, Christian, 38104 Braunschweig (DE); OLFE, Jürgen, 38543 Volkse (DE)
(86) Internationale Anmeldenummer: PCT/EP2022/070189
(87) Internationale Veröffentlichungsnummer: WO 2023/030742

(56) Entgegenhaltungen:
- DE-A1- 10 065 550
- DE-A1- 102014 215 793
- DE-A1- 2 642 390
- US-A1- 2011 049 130

## Beschreibung

Die Erfindung betrifft ein elastokalorisches Element für ein Temperiersystem, ein Temperiersystem sowie ein Kraftfahrzeug mit einem Temperiersystem.

Der elastokalorische Effekt, welcher gewöhnlich durch zyklische Deformation eines elastokalorischen Materials im Dehnungsbereich 1% - 5% (Druck oder Zug) eine reversible Temperaturänderung hervorruft, ist technisch für eine Temperierung nutzbar. Dabei erwärmt sich das elastokalorische Material wenn es gestaucht wird und kühlt bei anschließender Streckung wieder auf die Ursprungstemperatur ab. Durch zyklisches Abführen der Wärme am elastokalorischen Material kann der Effekt zur besagten Temperierung, insbesondere Klimatisierung in Form von Kühlung oder Heizung, genutzt werden.

Bei elastokalorischen Materialien handelt es sich dabei um Metalllegierungen mit elastokalorischem Effekt, die naturgemäß einen hohen Elastizitätsmodul besitzen und damit verhältnismäßig steif sind, weshalb für gewöhnlich große Kräfte, Momente oder elektrische Ströme aufgewendet werden müssen, um einen technisch nutzbaren Effekt in Form einer hinreichend hohen thermischen Leistung zu erzielen.

Um hohe thermische Leistungen bei gleichzeitig nur geringem Einsatz von elastokalorischem Material zu erzielen, sollte die Oberfläche des elastokalorischen Materials möglichst groß sein, um die Wärme so zügig wie möglich an die Umgebung abführen zu können. Wenn die Wärme zügig abgeführt wird, kann die Systemfrequenz des Temperiersystems hoch gewählt werden.

Bekannte Lösungen zum zyklischen Betrieb des elastokalorischen Materials liegen für Zug- und Druckbelastung vor.

Im Falle des Betriebs des elastokalorischen Materials unter Zugbelastung existieren Lösungen mit dünnen Drähten als elastokalorische Elemente, die aus dem elastokalorischen Material gefertigt werden. Eine derartige Lösung wird beispielsweise in US 2020/0088449 A1 beschrieben. Die Drähte können für eine hinreichend schnelle Wärmeabfuhr so ausgeführt sein, dass sehr geringe Drahtdurchmesser von 200 µm realisiert werden müssen. Die Drähte werden typischerweise mit Systemfrequenzen von weniger als 1 Hz betrieben und erreichen in derzeitigen Prototypen bei einer Materialmenge von 50 g eine thermische Leistung von ca. 250

W. Um eine Kälte-/Wärmeleistung von 5 kW und mehr, wie sie insbesondere in Automobilanwendungen benötigt wird, zu realisieren, benötigt man entsprechend eine hohe Anzahl an Drähten (> 1000). Weitere Nachteile liegen in der geringen Dauerhaltbarkeit der Drähte sowie der geringen Robustheit gegenüber Toleranzen, Vibrationen und Temperatureinflüssen.

Im Falle des Betriebs des elastokalorischen Materials unter Druckbelastung existieren im Stand der Technik Lösungen mit Hohlstäbchen als elastokalorische Elemente, die aus dem elastokalorischen Material gefertigt werden. Aufgrund der Druckbelastung ergibt sich der Vorteil einer höheren Dauerhaltbarkeit. Gleichzeitig muss das elastokalorische Material zusätzlich zur Wärmeerzeugung auch für die stabilitätsgebende Form verwendet werden, sodass die Stäbchen mit einer hinreichend dicken Wandstärke ausgeführt werden müssen, um unter Druckbelastung nicht zu knicken. Die im Vergleich zur Lösung mit den Drähten größere Wanddicke führt zu einer langsameren Wärmeabfuhr aus dem elastokalorischen Material, sodass höhere Frequenzen nur mit schlechterem Wirkungsgrad erreichbar sind. Entsprechend ist für diese Variante der Materialbedarf erhöht.

Aus WO 2019/166251 A1 ist ein hybrider Ansatz für ein elastokalorisches Element bekannt. Das dort beschriebene elastokalorische Element besteht aus drei Lagen, wobei eine mittlere Lage als ein Federblech ausgeführt ist und die die mittlere Lage umgebenden Lagen aus unterschiedlichen elastokalorischen Materialien mit einer Schichtdicke von jeweils 225 µm ausgebildet sind.

Weiterhin ist aus dem Dokument US2011/0049130 A1 ein weiteres elastokalorisches Element für ein Temperiersystem bekannt. In einem Ausführungsbeispiel besteht es aus einem Elastomer, dass ein Heizelement umschließt und in Kontakt mit einer Schicht aus einem Formgedächtnislegierungsmaterial besteht.

Weiterhin ist aus dem Dokument DE 100 65 550 A1 ein Verbundkörper mit einem thermoelastischen Polymer bekannt.

Aufgabe der hier vorliegenden Erfindung ist es, die Nachteile der aus dem Stand der Technik bekannten elastokalorischen Elemente zu vermindern, insbesondere ein elastokalorisches Element bereitzustellen, welches unter zyklischer Belastung eine hohe Dauerhaltbarkeit aufweist, beim Einsatz in einem Temperiersystem eine gesteigerte Betriebsfrequenz und einen verbesserten Wärmeübergang mit sich bringt sowie einen geringen Bedarf an elastokalorischem Material aufweist.

Die voranstehende Aufgabe wird durch die Gegenstände der Patentansprüche, insbesondere durch ein elastokalorisches Material nach Anspruch 1, ein Temperiersystem nach Anspruch 9 und ein Kraftfahrzeug nach Anspruch 10, gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen elastokalorischem Material offenbart sind, selbstverständlich auch im Zusammenhang mit dem erfindungsgemäßen Temperiersystem und dem erfindungsgemäßen Kraftfahrzeug sowie jeweils umgekehrt, sodass bezüglich der Offenbarung zu den einzelnen Erfindungsaspekten stets wechselseitig Bezug genommen wird beziehungsweise werden kann.

Gemäß eines ersten Aspekts löst die Erfindung die Aufgabe durch ein elastokalorisches Element für ein elastokalorisches Temperiersystem, wobei das elastokalorische Element einen elastischen Träger und eine auf den Träger aufgebrachte Beschichtung aufweist, wobei der Träger zumindest teilweise aus einem Kunststoff besteht und die Beschichtung zumindest teilweise aus einem elastokalorischen Material besteht.

Die zumindest teilweise Ausbildung des elastokalorischen Materials mit einem Träger aus Kunststoff ermöglicht gegenüber der vollständigen Ausbildung des elastokalorischen Elements aus elastokalorischem Material lediglich eine (insbesondere dünne) Beschichtung mit dem elastokalorischem Material und damit eine erhebliche Erhöhung der Dauerhaltbarkeit des elastokalorischen Materials unter zyklischer Belastung bei hoher Dehnung (> 1 % oder > 2 %). Ferner wird eine Steigerung der Betriebsfrequenz infolge von geringer Schichtdicke des elastokalorischen Materials ermöglicht, die durch Einbringen des Trägers mit Kunststoff gegenüber den bekannten Lösungen bereitgestellt wird. Auch ein verbesserter Wärmeübergang zur Umgebung kann ermöglicht werden, was einen effizienteren Betrieb des elastokalorischen Elements ermöglicht. Auch kann elastokalorisches Material beim erfindungsgemäßen elastokalorischen Element eingespart werden, wie näher mit Bezug auf die Schichtdicke des elastokalorischen Materials erläutert wird. Dies führt zu Gewichts- und Kostenersparnissen bei Einsatz und Herstellung des elastokalorischen Elements.

Ganz besonders kann durch den Einsatz von Kunststoff im oder als Träger das elastokalorische Material in bspw. bis zu 10-fach geringerer Dicke, etwa mit 20 µm, auf den Träger aufgebracht werden, als dies in heutigen Lösungen der Fall ist, etwa bei den Drähten aus elastokalorischem Material mit Durchmessern von über 200 µm. Dies reduziert den Materialbedarf und verbessert den Wärmeübergang, sodass bei gleicher thermischer Leistung weniger kalorisches Material mit einer höheren Systemfrequenz betrieben werden kann, als in bekannten Lösungen. Ein weiterer Vorteil wurde in der höheren Dauerhaltbartkeit von dünnen Schichten aus elastokalorischem Material mit Schichtdicken von beispielsweise weniger als 50 µm und in der robusteren Ausführung identifiziert, die erfindungsgemäß möglich ist. Im Falle der bekannten Lösung mit den dünnen Drähten kommt es bei einem Riss mit einer hohen Wahrscheinlichkeit zum Totalausfall der Maschine. Ein Riss in der elastokalorischen Schicht des elastokalorischen Elements der Erfindung auf der Beschichtung führt indes nur zu einer Verhinderung des kalorischen Effekts in einem lokalen Bereich und damit lediglich zu einer geringen Reduzierung der thermischen Leistung, nicht jedoch zum Ausfall des Temperiersystems.

Dass der Träger elastisch ist, meint, dass er bis zu einem gewissen Grad elastisch verformt werden kann, insbesondere reversibel bei großen Dehnungen > 1%, > 5% oder gar > 10% reversibel elastisch verformt werden kann, ohne eine plastische Verformung zu vollziehen. Mit anderen Worten kann der Träger durch Krafteinwirkung reversibel verformt werden. Die elastischen Eigenschaften des Trägers können durch die Wahl des Kunststoffs bereitgestellt werden. Als Kunststoff kann beispielsweise ein Elastomer, ein Thermoplast oder ein sonstiges Polymer gewählt werden, welches vorzugsweise die oben angegebenen elastischen Eigenschaften aufweist. Auch Kombinationen unterschiedlicher, insbesondere der vorgenannten, elastischen Kunststoffe sind möglich. Der elastische Kunststoff weist eine teils deutlich höhere reversible Verformbarkeit auf, als elastokalorische Materialien dies tun. Sie können dadurch problemlos zerstörungsfrei über einen relevanten Dehnbereich von ca. 1 % - 5 % hinaus reversibel gedehnt werden. Ein weiterer Vorteil des Einsatzes des Kunststoffs ist, dass der Kunststoff einen niedrigen Wärmeleitkoeffizienten aufweist. Dadurch wirkt der Träger thermisch isolierend. Zudem besitzt der Träger damit eine gegenüber Metalllegierungen um ein vielfaches niedrigere Dichte. Insbesondere kann der Träger nur aus einem Kunststoff oder mehreren Kunststoffen bestehen.

Die Beschichtung kann insbesondere eine konstante Schichtdicke bzw. Dicke aufweisen. Die Beschichtung kann insbesondere entlang einer gesamten oder nahezu gesamten äußeren (Mantel)fläche des Trägers ausgebildet sein. Die Beschichtung kann entsprechend als eine den Träger umlaufende Beschichtung ausgeführt sein. Vorteilhafterweise wird so ein besonders hoher Flächenausnutzungsgrad des Trägers mit der Beschichtung erzielt, um möglichst viel Beschichtung mit geringer Schichtdicke auf den Träger aufbringen zu können und die thermische Leistung dadurch ohne Nachteile bei der Dauerhaltbarkeit zu erhöhen. Neben dem elastokalorischen Material können andere Bestandteile in der Beschichtung vorgesehen sein. Insbesondere kann die Beschichtung entsprechend nur aus einem oder mehreren, beispielsweise zwei oder drei, unterschiedlichen elastokalorischen Materialien bestehen.

Bei dem Temperiersystem handelt es sich um ein System zur Temperierung einer Struktur oder eines Raums. Das Temperiersystem kann auch als Klimatisierungssystem oder Klimasystem bezeichnet werden. Insofern kann eine Temperierung oder Klimatisierung mittels des Systems bereitgestellt werden, welche die Möglichkeiten der Kühlung und Heizung umfassen kann.

Die Beschichtung kann insbesondere eine Schichtdicke von bis zu 200 µm aufweisen. Ganz besonders kann die Schichtdicke der Beschichtung bis zu 150 µm, ferner ganz besonders bis zu 100 µm, noch mehr besonders bis zu 80 µm oder bis zu 50 µm betragen. Ganz besonders kann die Beschichtung eine Schichtdicke im Bereich von 5 µm bis 100 µm, insbesondere im Bereich von 7 µm bis 80 µm und ferner insbesondere im Bereich von 10 µm bis 50 µm aufweisen. Derart geringe Schichtdicken werden durch den elastischen Träger ermöglicht, der die für die Verformung des elastokalorischen Elements notwendige Elastizität mit sich bringt, sodass dieser gemeinsam mit der Beschichtung bis zu einem gewissen Grad, der für den Betrieb des Temperiersystems notwendig ist, rein elastisch bzw. reversibel verformt werden kann. Dabei hat sich gezeigt, dass mit derart geringen Schichtdicken in Kombination mit dem elastischen Träger erstaunlicherweise eine hohe thermische Leistung für das Temperiersystem bereitgestellt werden kann, ohne zu viel elastokalorisches Material für die Beschichtung verwenden zu müssen, sodass Kosten und Gewicht des elastokalorischen Elements gegenüber den bekannten elastokalorischen Elementen erheblich reduziert werden können. Dies ist gerade für Anwendungen in Temperiersystemen von Kraftfahrzeugen von erheblicher Bedeutung, da die Stückzahlen sehr groß sind.

Insbesondere kann der Träger bis zu einer Dehngrenze von zumindest 2 %, ganz besonders zumindest 3 % und ferner besonders zumindest 5 %, reversibel dehnbar sein. Diese Quantifizierung der elastischen Eigenschaften des Trägers bringt mit sich, dass der Träger derart ausgestaltet ist, dass er in einem Temperiersystem zusammen mit der darauf befindlichen Beschichtung sinnvoll genutzt werden kann. Dabei kann er in dem geforderten Mindestumfang elastisch verformt bzw. gedehnt werden, womit auch die darauf befindliche Beschichtung verformt wird und die geforderte thermische Leistung des Temperiersystems bereitstellen kann.

Ganz besonders kann das elastokalorische Material eine Formgedächtnislegierung sein. Bei mehreren elastokalorischen Materialien in der Beschichtung können unterschiedliche Formgedächtnislegierungen eingesetzt werden. Formgedächtnislegierungen haben zwei unterschiedliche Kristallstrukturen, die temperaturabhängig sind. Die Phasenwandlung bei Formgedächtnislegierungen basiert auf einer temperaturabhängigen Gitterumwandlung zu einer der beiden Kristallstrukturen. Es gibt in der Regel die Austenit genannte Hochtemperaturphase und die Martensit genannte Niedertemperaturphase. Beide können durch Verformung ineinander übergehen. Die damit verbundene Temperaturänderung wird in dem Temperiersystem für das gewünschte Temperieren, entweder Kühlen oder Heizen, genutzt. Dabei können sämtliche Materialien, insbesondere Formgedächtnislegierungen, die den elastokalorischen Effekt vorweisen, zum Einsatz kommen können. Als Formgedächtnislegierung kann beispielsweise eine NiTi-Legierung (Nickel-Titan, Nitinol) eingesetzt werden, welche einen ausgeprägten elastokalorischen Effekt aufweist, der einen großen Temperaturhub ermöglicht. Möglich ist aber beispielsweise auch der Einsatz von kupferbasierten Legierungen wie CuZn (Kupfer-Zink), CuAINi (Kupfer-Aluminium-Nickel) oder CuZnAl (Kupfer-Zink-Aluminium) als Formgedächtnislegierung. Auch der Einsatz von FeNiAl (Eisen-Nickel-Aluminium), FeMnSi (Eisen-Mangan-Silizium) und ZnAuCu (Zink-Gold-Kupfer) als Formgedächtnislegierung ist möglich.

Der Träger kann als ein Trägerkörper mit einem Querschnitt ausgebildet sein. Der Querschnitt kann zumindest überwiegend konstant sein. Der Querschnitt kann entsprechend entlang einer überwiegenden Teillänge des Trägerkörpers oder der gesamten oder nahezu gesamten Länge des Trägerkörpers konstant sein. Alternativ kann der Querschnitt aber auch nicht konstant sein. Dabei kann der Querschnitt des Trägerkörpers beispielsweise kreisförmig oder oval sein. Er kann als ein Vollprofil ausgestaltet sein. Möglich ist aber auch, zur Erhöhung einer Flexibilität des Trägers und Reduktion des Gewichts, die Ausgestaltung des Trägerkörpers mit einem Hohlprofil. Insgesamt kann damit nicht nur durch unterschiedliche Materialwahl für den Träger, sondern auch durch seine Formgebung eine Flexibilität erhöht werden. Ein konstanter Querschnitt kann dabei sehr einfach gefertigt werden, wodurch die Herstellungskosten weiter gesenkt werden können.

Ganz besonders kann der Querschnitt des Trägers bzw. Trägerkörpers, der zumindest überwiegend konstant sein kann oder aber alternativ nicht konstant oder nur abschnittsweise konstant sein kann, ringförmig, sternförmig oder kreuzförmig ausgebildet sein. Bei einem ringförmigen Querschnitt wird das bereits erwähnte Hohlprofil erzielt, wodurch sich das Gewicht des elastokalorischen Elements weiter reduzieren lässt. Auch eine sternförmige oder kreuzförmige Querschnittsgestaltung ermöglicht eine Reduktion von Gewicht und Erhöhung der Flexibilität zur Verformung des elastokalorischen Elements. Daneben sind Kombinationen der genannten Querschnittsformen und davon abgewandelte oder weitere Querschnittsformen denkbar, welche gemein haben, bei möglichst geringem fertigungstechnischem Aufwand eine möglichst große Oberfläche des elastokalorischen Elements bei gleichzeitig geringem Raumbedarf bereitzustellen.

Möglich ist ferner, dass der Träger als eine Feder ausgebildet ist. Mit anderen Worten kann der Träger in Form einer Feder ausgestaltet sein. Möglich ist beispielsweise die Ausbildung des Trägers als eine Spiralfeder, eine Tellerfeder oder eine Schraubenfeder.

Gemäß einem zweiten Aspekt der Erfindung wird die eingangs erwähnte Aufgabe durch ein Temperiersystem mit einem elastokalorischem Element nach dem ersten Aspekt der Erfindung gelöst.

Bei dem Temperiersystem kann es sich insbesondere um ein Temperiersystem für ein Kraftfahrzeug handeln. Das Temperiersystem kann eine Klimaanlage, Wärmepumpe oder dergleichen in dem Fahrzeug sein oder Bestandteil einer der vorgenannten Einheiten bzw. Systeme sein.

Wie zuvor erläutert, können elastokalorische Materialien zwei verschiedene Kristallstrukturen annehmen. Im Temperiersystem wird durch Druckbeaufschlagung oder dergleichen eine mechanische Spannung in dem elastokalorischen Element erzeugt, wodurch es zu einer kristallinen Phasenumwandlung der Beschichtung bzw. des elastokalorischen Materials kommt, wobei sich das elastokalorische Material bzw. die Beschichtung des elastokalorischen Elements von einer Ausgangstemperatur auf eine erhöhte Temperatur erwärmt. Über eine Wärmesenke des Temperiersystems wird die dabei entstandene Wärme abgeführt und die Temperatur des elastokalorischen Materials bzw. der Beschichtung fällt infolgedessen auf die Ausgangstemperatur oder auf eine geringfügig höhere Temperatur zurück. Wird nun die mechanische Spannung entfernt, so kühlt sich das elastokalorische Material bzw. die Beschichtung auf eine gesenkte Temperatur unterhalb des Ausgangsniveaus ab. Nun kann das elastokalorische Material mit einer zu kühlenden Stelle des Temperiersystems verbunden werden, sodass es Wärme aufnimmt, bis die Ausgangstemperatur erreicht ist. Auch oder alternativ ist die Abfuhr der Wärme durch einen Kühlmittel-Massenstrom, z.B. Luft, Wasser-Glycol-Gemisch oder dergleichen, möglich, welcher dann zu der zu kühlenden Struktur, bei einem Fahrzeug beispielsweise einer Batterie, und/oder zu dem zu kühlenden Raum, bei einem Fahrzeug beispielsweise eines Fahrtgastraums, geleitet wird. Durch eine derartige zyklische Be- und Entlastung des elastokalorischen Elements und damit der Beschichtung in dem Temperiersystem und entsprechende Wärmeabfuhr lässt sich ein Kreisprozess in dem Temperiersystem herstellen. So kann das Temperiersystem mit dem elastokalorischen Element als eine effiziente Wärmepumpe zum Kühlen oder Heizen ausgebildet werden, die auf Kältemittel verzichtet.

Gemäß einem dritten Aspekt der Erfindung wird die eingangs erwähnte Aufgabe durch ein Kraftfahrzeug mit dem Temperiersystem nach dem zweiten Aspekt der Erfindung gelöst.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine perspektivische Ansicht eines elastokalorischen Elements gemäß einem ersten Ausführungsbeispiel der Erfindung;
- Fig. 2: eine Querschnittsansicht eines elastokalorischen Elements gemäß einem zweiten Ausführungsbeispiel der Erfindung;
- Fig. 3: eine Querschnittsansicht eines elastokalorischen Elements gemäß einem dritten Ausführungsbeispiel der Erfindung;
- Fig. 4: eine Querschnittsansicht eines elastokalorischen Elements gemäß einem vierten Ausführungsbeispiel der Erfindung;
- Fig. 5: eine Querschnittsansicht eines elastokalorischen Elements gemäß einem fünften Ausführungsbeispiel der Erfindung;
- Fig. 6: eine perspektivische Ansicht eines elastokalorischen Elements gemäß einem sechsten Ausführungsbeispiel der Erfindung;
- Fig. 7: eine Vorderansicht eines elastokalorischen Elements gemäß einem siebten Ausführungsbeispiel der Erfindung;
- Fig. 8: eine perspektivische Ansicht eines elastokalorischen Elements gemäß einem achten Ausführungsbeispiel der Erfindung; und
- Fig. 9: eine schematische Ansicht eines Kraftfahrzeugs mit einem Temperiersystem gemäß einem Ausführungsbeispiel der Erfindung.

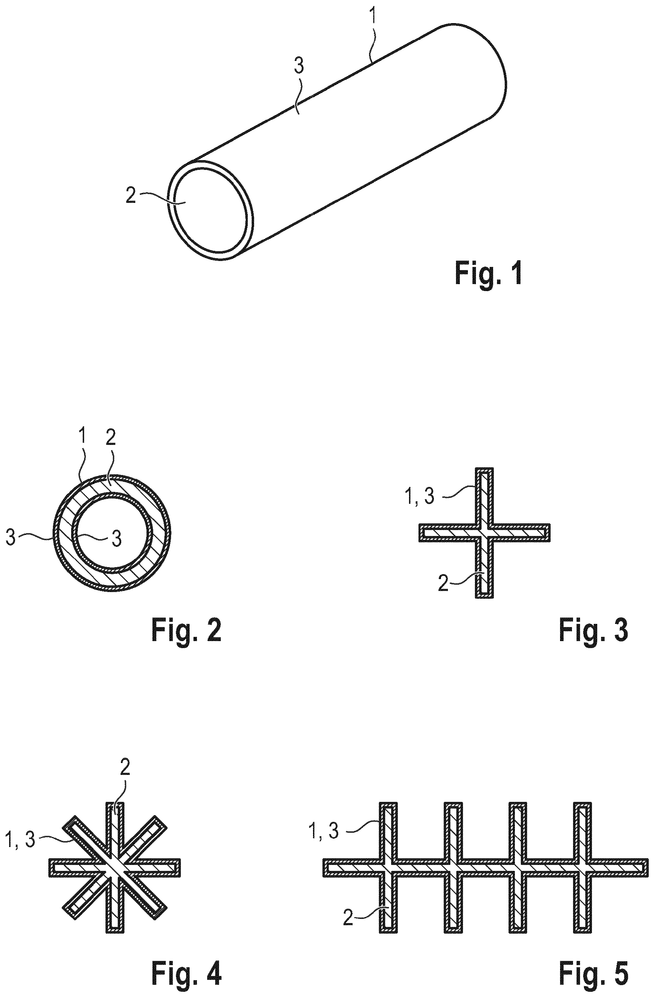

Elemente mit gleicher Funktion und Wirkungsweise sind in den Figuren 1 bis 9 jeweils mit denselben Bezugszeichen versehen.

Figur 1 zeigt ein elastokalorisches Element 1. Das elastokalorische Element 1 weist einen Träger 2 auf, welcher vorliegend beispielhaft als ein zylindrischer Trägerkörper mit einem Vollprofil ausgebildet ist. Der Träger 2 ist aus einem Kunststoff, beispielsweise einem Elastomer, gebildet. Der Träger 2 ist entsprechend mit elastischen Eigenschaften ausgestattet.

Auf dem Träger 2 ist eine Beschichtung 3 aufgebracht. Die Beschichtung 3 ist vorliegend auf der gesamten äußeren Mantelfläche des Trägers 2 aufgebracht. Die Beschichtung 3 besteht aus einem elastokalorischen Material, insbesondere einer Formgedächtnislegierung, wie beispielsweise einer Nickel-Titan-Legierung. Die Beschichtung 3 kann eine vergleichsweise geringe Schichtdicke im Bereich von beispielsweise 10 µm bis 50 µm aufweisen. Die Schichtdicke kann dabei konstant sein.

Figuren 2 bis 5 zeigen elastokalorische Elemente 1, die im Aufbau aus Träger 2 und Beschichtung 3 mit Materialwahl und Schichtdicke der Beschichtung 3 dem elastokalorischen Element 1 der Fig. 1 gleichen können. Allerdings weisen die elastokalorischen Elemente 1 der Fig. 2 bis 5 von dem elastokalorischen Element 1 der Fig. 1 abweichende Querschnittsformen des länglichen Trägerkörpers auf. Die Querschnitte sind jeweils konstant über die Länge des Trägers 2 bzw. elastokalorischen Elements 1.

So ist das elastokalorische Element 1 der Fig. 2 mit einem ringförmigen Querschnitt ausgebildet. Der Träger 2 ist als ein Hohlprofil ausgebildet. Die Beschichtung 3 ist an der äußeren und inneren Mantelfläche angebracht. Dies erhöht gegenüber der Ausführungsform der Fig. 1 die Fläche der Beschichtung 3.

Das elastokalorische Element 1 der Fig. 3 ist mit einem kreuzförmigen Querschnitt ausgebildet. Das elastokalorische Element 1 der Fig. 4 wiederum ist mit einem sternförmigen Querschnitt ausgebildet, bei dem die Fläche der Beschichtung 3 wiederum gegenüber der aus Fig. 3 erhöht ist. Fig. 5 zeigt ein elastokalorisches Element 1 mit einem sich wiederholenden kreuzförmigen Querschnitt. Hier ist der Träger 2 im Querschnitt mit mehreren an einander angrenzenden bzw. einander anschließenden Kreuzquerschnitten ausgebildet.

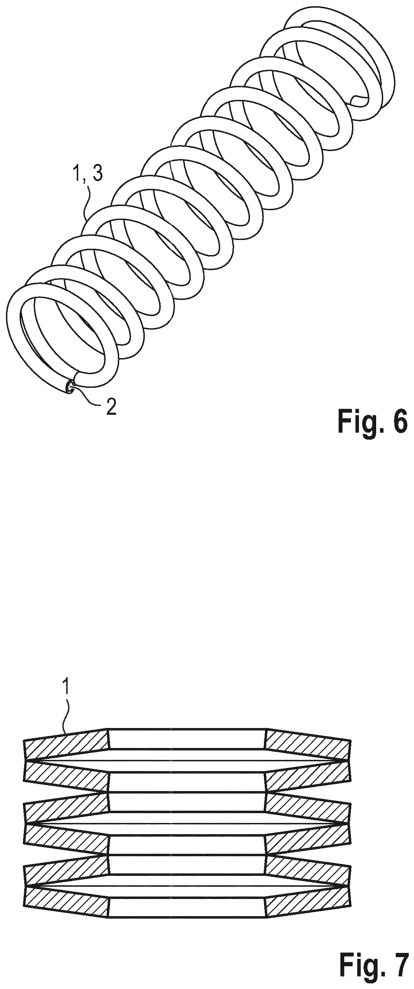

Figuren 6 bis 8 zeigen elastokalorische Elemente 1, die im Aufbau aus Träger 2 und Beschichtung 3 mit Materialwahl und Schichtdicke der Beschichtung 3 dem elastokalorischen Element 1 der Fig. 1 gleichen können. Allerdings weisen die elastokalorischen Elemente 1 der Fig. 6 bis 8 von dem elastokalorischen Element 1 der Fig. 1 abweichende Querschnittsformen des Trägerkörpers auf.

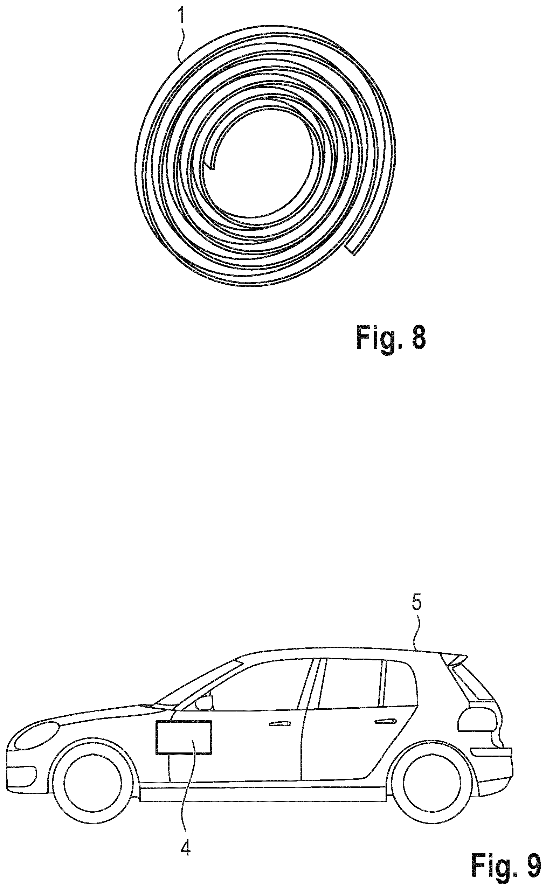

So ist das elastokalorische Element 1 der Fig. 6 als eine Schraubenfeder ausgebildet. Das elastokalorische Element 1 der Fig. 7 ist als eine Tellerfeder ausgebildet und das elastokalorische Element 1 der Fig. 8 ist als eine Spiralfeder ausgebildet.

Figur 9 zeigt schließlich rein schematisch ein Kraftfahrzeug 5, in welchem ein Temperiersystem 4 vorgesehen ist, welches das elastokalorische Element 1 gemäß einem der Ausführungsbeispiele der Fig. 1 bis 8 einsetzt. Das Temperiersystem 4 kann dabei insbesondere als eine Wärmepumpe ausgestaltet sein. Das Temperiersystem 4 macht sich die elastokalorischen Eigenschaften des elastokalorischen Elements 1 bei Verformung des elastokalorischen Elements 1 und damit der darauf befindlichen Beschichtung 3 mit den elastokalorischen Eigenschaften zu Nutze und kann dadurch auf Kältemittel verzichten.

### Bezugszeichenliste

- 1: Elastokalorisches Element
- 2: Träger
- 3: Beschichtung
- 4: Temperiersystem
- 5: Kraftfahrzeug

## Patentansprüche

1. Elastokalorisches Element (1) für ein Temperiersystem (4), wobei das elastokalorische Element (1) einen elastischen Träger (2) und eine auf den Träger (2) aufgebrachte Beschichtung (3) aufweist, wobei der Träger (2) zumindest teilweise aus einem Kunststoff besteht und die Beschichtung (3) zumindest teilweise aus einem elastokalorischen Material besteht.

2. Element (1) nach Anspruch 1, wobei die Beschichtung (3) eine Schichtdicke von bis zu 200 µm aufweist.

3. Element (1) nach Anspruch 1 oder 2, wobei die Beschichtung (3) eine Schichtdicke im Bereich von 5 µm bis 100 µm aufweist.

4. Element (1) nach einem der voranstehenden Ansprüche, wobei der Träger (2) bis zu einer Dehngrenze von zumindest 2 % reversibel dehnbar ist.

5. Element (1) nach einem der voranstehenden Ansprüche, wobei das elastokalorische Material eine Formgedächtnislegierung ist.

6. Element (1) nach einem der voranstehenden Ansprüche, wobei der Träger (2) als ein Trägerkörper mit einem zumindest überwiegend konstanten Querschnitt ausgebildet ist.

7. Element (1) nach einem der voranstehenden Ansprüche, wobei der Träger (2) mit einem ringförmigen, sternförmigen oder kreuzförmigen Querschnitt ausgebildet ist.

8. Element (1) nach einem der voranstehenden Ansprüche, wobei der Träger (2) als eine Feder ausgebildet ist.

9. Temperiersystem (4) mit einem elastokalorischem Element (1) nach einem der voranstehenden Ansprüche.

10. Kraftfahrzeug (5) mit einem Temperiersystem (4) nach Anspruch 9.

## Claims

1. Elastocaloric element (1) for a temperature control system (4), wherein the elastocaloric element (1) has an elastic carrier (2) and a coating (3) applied to the carrier (2), wherein the carrier (2) is at least partially made of a plastics material and the coating (3) is at least partially made of an elastocaloric material.

2. Element (1) according to claim 1, wherein the coating (3) has a layer thickness of up to 200 µm.

3. Element (1) according to claim 1 or claim 2, wherein the coating (3) has a layer thickness in the range of 5 µm to 100 µm.

4. Element (1) according to any of the preceding claims, wherein the carrier (2) is reversibly stretchable up to a yield strength of at least 2%.

5. Element (1) according to any of the preceding claims, wherein the elastocaloric material is a shape-memory alloy.

6. Element (1) according to any of the preceding claims, wherein the carrier (2) is in the form of a carrier body having a cross section that is at least predominantly constant.

7. Element (1) according to any of the preceding claims, wherein the carrier (2) has an annular, star-shaped or cross-shaped cross section.

8. Element (1) according to any of the preceding claims, wherein the carrier (2) is in the form of a spring.

9. Temperature control system (4) comprising an elastocaloric element (1) according to any of the preceding claims.

10. Motor vehicle (5) comprising a temperature control system (4) according to claim 9.

## Revendications

1. Élément élastocalorique (1) pour un système d'équilibrage de température (4), dans lequel l'élément élastocalorique (1) présente un support (2) élastique et un revêtement (3) appliqué sur le support (2), dans lequel le support (2) est constitué au moins partiellement d'une matière plastique et le revêtement (3) est constitué au moins partiellement d'un matériau élastocalorique.

2. Élément (1) selon la revendication 1, dans lequel le revêtement (3) présente une épaisseur de couche allant jusqu'à 200 µm.

3. Élément (1) selon la revendication 1 ou 2, dans lequel le revêtement (3) présente une épaisseur de couche dans la plage allant de 5 µm à 100 µm.

4. Élément (1) selon l'une des revendications précédentes, dans lequel le support (2) est extensible de manière réversible jusqu'à une limite d'extension d'au moins 2 %.

5. Élément (1) selon l'une des revendications précédentes, dans lequel le matériau élastocalorique est un alliage à mémoire de forme.

6. Élément (1) selon l'une des revendications précédentes, dans lequel le support (2) est réalisé sous forme de corps formant support comportant une section transversale au moins principalement constante.

7. Élément (1) selon l'une des revendications précédentes, dans lequel le support (2) est réalisé avec une section transversale annulaire, en forme d'étoile ou de croix.

8. Élément (1) selon l'une des revendications précédentes, dans lequel le support (2) est réalisé sous forme de ressort.

9. Système d'équilibrage de température (4) comportant un élément élastocalorique (1) selon l'une des revendications précédentes.

10. Véhicule automobile (5) comportant un système d'équilibrage de température (4) selon la revendication 9.
